# EUROPEAN PATENT SPECIFICATION

(11) **EP 2 563 529 B1**
(45) Date of publication and mention of the grant of the patent: **22.05.2019**
(21) Application number: 11714825.4
(22) Date of filing: 11.04.2011
(51) Int. Cl.: B07B 1/46

(54) **APPARATUS AND METHOD FOR SEPARATING SOLIDS FROM A SOLIDS LADEN DRILLING FLUID**
VORRICHTUNG UND VERFAHREN ZUR ABSCHEIDUNG VON FESTSTOFFEN AUS EINEM MIT FESTSTOFFEN BELADENEN BOHRFLUID
APPAREIL ET PROCÉDÉ PERMETTANT DE SÉPARER DES MATIÈRES SOLIDES D'UNE BOUE DE FORAGE CHARGÉE EN MATIÈRES SOLIDES

(30) Priority: 30.04.2010 US 771201
(43) Date of publication of application: 06.03.2013
(60) Divisional application: 18180511.0
(73) Proprietor: National Oilwell Varco, L.P., Houston, Texas 77036 (US)
(72) Inventor: BURNETT, George, Alexander, Aberdeen Aberdeenshire AB10 7JR (GB); LARSON, Thomas Robert, Montgomery, TX 77316 (US)
(74) Representative: Rankin, Douglas
(86) International application number: PCT/GB2011/050714
(87) International publication number: WO 2011/135325

(56) References cited:
- WO-A1-2004/110589
- WO-A2-2009/048783
- US-A- 5 385 669
- US-A- 6 155 428
- US-A1- 2010 089 652

## Description

The invention relates to a method for controlling operation of a shale shaker according to the preamble of claim 1 and to a shale shaker according to the preamble of claim 2.

Such a method and such a shale shaker are known by WO 2009/048783 A2.

In the drilling of a borehole in the construction of an oil or gas well, a drill bit is arranged on the end of a drill string, which is rotated to bore the borehole through a formation. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The density of the drilling mud is closely controlled to inhibit the borehole from collapse and to ensure that drilling is carried out optimally. The density of the drilling mud affects the rate of penetration of the drill bit. By adjusting the density of the drilling mud, the rate of penetration changes at the possible detriment of collapsing the borehole. The drilling mud may also carry lost circulation materials for sealing porous sections of the borehole. The acidity of the drilling mud may also be adjusted according to the type of formation strata being drilled through. The drilling mud contains *inter alia* expensive synthetic oil-based lubricants and it is normal therefore to recover and re-use the used drilling mud, but this requires *inter alia* the solids to be removed from the drilling mud. This is achieved by processing the drilling mud. The first part of the process is to separate the solids from the solids laden drilling mud. This is at least partly achieved with a vibratory separator, such as those shale shakers disclosed in US 5,265,730, WO 96/33792 and WO 98/16328. Further processing equipment such as centrifuges and hydrocyclones may be used to further clean the mud of solids. The solids are covered in contaminates and residues. It is not uncommon to have 30 to 100 m³ of drilling fluid in circulation in a borehole.

The resultant solids, known herein as "drill cuttings" are processed to remove substantially all of the residues and contaminates from the solids. The solids can then be disposed of in a landfill site or by dumping at sea in the environment from which the solids came. Alternatively, the solids may be used as a material in the construction industry or have other industrial uses.

Shale shakers generally comprise an open bottomed basket having one open discharge end and a solid walled feed end. A number of rectangular screens are arranged over the open bottom of the basket. The screens may be substantially planar or have a slight crown. The basket is arranged on springs above a receptor for receiving recovered drilling mud. A skip or ditch is provided beneath the open discharge end of the basket. A motor is fixed to the basket, which has a drive rotor provided with an offset clump weight. In use, the motor rotates the rotor and the offset clump weight, which causes the basket and the screens fixed thereto to shake. Solids laden mud is introduced at the feed end of the basket on to the screens. The shaking motion induces separation of the drilling mud from the solids, the drilling mud passing through the screens and the solids above the screens. The shaking motion also induces the solids to move along the screens towards the open discharge end. The recovered drilling mud is received in the receptor for further processing and the solids pass over the discharge end of the basket into the ditch or skip.

The rectangular screens may be arranged at an angle to horizontal, such as a seven degrees incline from the feed end to the discharge end of the shale shaker. The angle may be adjustable. The screens are generally fixed in the basket and the basket is adjustable to adjust the angle of the screens relative to horizontal. The flow of solids laden drilling fluid may form a pool on the inclined screens. The action of the vibratory mechanism induces solids to climb the inclined screens to the discharge end of the shaker and into the ditch or skip.

Generally, a vibratory mechanism inducing a circular vibration will tend to throw solids from the screen into the air in random directions. A vibratory mechanism inducing an elliptical motion will induce the solids to move in a direction of the longest chord of the ellipse. A shale shaker having a vibratory mechanism inducing a very thin ellipse is known as a linear shale shaker and induces fast movement of solids along the screen, although the screen tends to suffer fast degradation due to sudden deceleration of the solids as they meet the screen.

The screens are generally of one of two types: hook-strip; and pre-tensioned.

The hook-strip type of screen comprises several rectangular layers of mesh in a sandwich, usually comprising one or two layers of fine grade mesh and a supporting mesh having larger mesh holes and heavier gauge wire. The layers of mesh are joined at each side edge by a strip which is in the form of an elongate hook. In use, the elongate hook is hooked on to a tensioning device arranged along each side of a shale shaker. The shale shaker further comprises a crowned set of supporting members, which run along the length of the basket of the shaker, over which the layers of mesh are tensioned. An example of this type of screen is disclosed in GB-A-1,526,663. The supporting mesh may be provided with or replaced by a panel having apertures therein.

The pre-tensioned type of screen comprises several rectangular layers of mesh, usually comprising one or two layers of fine grade mesh and a supporting mesh having larger mesh holes and heavier gauge wire. The layers of mesh are pre-tensioned on a rigid support comprising a rectangular angle iron frame and adhered thereto. The screen is then inserted into C-channel rails arranged in a basket of a shale shaker. An example of this type of screen is disclosed in GB-A-1,578,948 and an example of a shale shaker suitable for receiving the pre-tensioned type screens is disclosed in GB-A-2,176,424.

A problem associated with shale shakers is that screens used therein tend to blind, especially when the solids are gummy, such as clay, or of a size close to the size of the mesh size of the screen. The latter type of blinding is known as near-sized particle blinding. A number of solutions have been proposed to tackle this problem, such as disclosed in GB-A-1,526,663 in which a screen assembly using two layers of screening material in a sandwich and allowing the layers of screening material to move independently to dislodge any near sized particles lodged in one of the screens.

It is advantageous to use fine-meshed filters to filter very small particles, for example of a size in the range of 50-200 µ or more, without the filtering device clogging up with the small particles. However, it is the fine-meshed filters in particular that are prone to such undesired clogging.

It is also advantageous to have a simple reliable separator to inhibit down-time for maintenance and repair.

It is preferable in certain circumstances to retain particles, for example of a particle size in the range of 50-60 µ or larger, by means of a filter.

In the drilling of an oil or gas well, cracks may exist in the wall of the wellbore. Such cracks may propagate, which could cause structural problems in the wall of the wellbore and/or allow drilling fluids to escape there thorough into the formation. Furthermore, if substantial amounts of drilling fluids are lost, the pressure in the drilling fluid in the wellbore may drop, which could cause collapse of the wellbore. Accordingly, Wellbore Strengthening Materials may be added to circulated drilling fluid. The Wellbore Strengthening Materials comprise sized particles. When the drilling fluid is circulated around the wellbore wall with cracks therein, the sized particles wedge themselves in the cracks, which reduces the likelihood of the cracks propagating. It is beneficial to recover these sized particles and reuse them in circulated drilling mud. Shale shakers have thus been modified to size solids in solids laden drilling fluid. Such a shale shaker is disclosed in USSN 12/490,492. A range of sizes of solids can be extracted using such a shale shaker and re-circulated as Wellbore Strengthening Material in fresh drilling fluid. It is desirable to retain some small particles such as barites that are often found in drilling muds, and thus the fine screens are preferably not too fine as to screen the barites from the dilling mud.

Disclosed herein is a shale shaker for separating solids from solids laden drilling fluid, the shale shaker comprising a basket having a first screen assembly in an upper screen deck and a second screen assembly in a lower screen deck, the basket further comprising a flow tray for feeding solids laden drilling fluid to a first duct and a second duct, the first duct for feeding solids laden drilling fluid to the first screen assembly and the second duct feeding solids laden drilling fluid to the second screen assembly wherein the second duct comprises a plurality of second duct openings for dividing the feed of solids laden drilling fluid and at least one discharge opening for dispersing the solids laden drilling fluid on to the second screen assembly

The VSM MultiSizer and PCT Publication No. WO 2010/150020 shows an overflow weir as a method of inducing parallel flow through the shaker. GB Publication No. 2 055 597 shows as a method of increasing throughput, distributing the flow over two screening decks on different levels to enable simultaneous processing.

A shale shakers function is to remove the solids from the fluid that it processes and testing has shown that due to these solids the above method of splitting the flow can lead to differing properties of fluid being processed by either level. This then leads to differing processing efficiencies and thus differing throughputs.

Preferably, the first duct has a first duct opening arranged between the plurality of second duct openings of the second duct. Advantageously, the shale shaker further comprises a further first duct opening, the first duct opening and further first duct opening interleaved with the plurality of second duct openings of the second duct. Advantageously, the shale shaker further comprises a multiplicity of first ducts each having a duct opening wherein the multiplicity of first duct openings are interleaved with the plurality of second duct openings of the second duct.

Preferably, the solids laden drilling fluid flows along the flow tray in a flow direction the flow tray having a flow tray width substantially transverse to the flow direction, the at least one first duct opening arranged across a first portion of the flow tray width and the second duct opening arranged across a second portion of the flow tray width, the first portion not overlapping the second portion.

Advantageously, the at least one first duct opening is a plurality of first duct openings, and the at least second duct opening is a plurality of second duct openings. Preferably, the solids laden drilling fluid flows along the flow tray in a flow direction, the plurality of first duct openings interleaved with the plurality of second duct openings, the plurality of first and second duct openings arranged substantially perpendicularly to the flow direction.

Advantageously, the flow tray has a feed end and a discharge end, the first and second duct openings arranged at the discharge end of the flow tray. Preferably, the flow tray has a floor and at least one of the first and second duct openings is planar with the floor of the flow tray. Advantageously, the other of the first and second ducts has a duct opening planar with a floor of the flow tray. The solids laden drilling fluid thus does not pass over a weir and the solids laden drilling fluid is split across the first and second screen decks with an even consistency. An overflow from a weir tends to contain more fluid and low density solids and the fluid left in behind the weir tends to contain high density solids, which tend to be sharp and aggressive which wear screening material out quickly. It is advantageous for the screen assemblies to wear evenly, so that all screens can be changed at one time, which reduces downtime of the shale shaker. Preferably, the duct opening is in the form of a planar opening a floor of the flow tray. Advantageously, the duct opening is perpendicular to the floor of the flow tray, the duct opening defined by a perimeter. Preferably, at least a portion of the perimeter is planar with the floor of the flow tray, so that all of the solids laden drilling fluid passes through the duct openings and noen gets trapped on the flow tray.

Advantageously, the flow tray further comprises a valve for directing the solids laden drilling fluid to one of the at least one first screen deck and the at least first and second duct openings. Preferably, the flow tray has at least one gate opening therein and the valve is a gate valve comprising a gate tray slideable from closed position closing off the gate opening to a position closing the gate opening.

The basket further comprises a scalping screen deck for receiving a scalping screen for removing large solids from said solids laden drilling fluid, such that in use said solids laden drilling fluid flow therefrom on to said flow tray and said large solids pass over said scalping screen. Preferably, the basket further comprises a fourth screen deck, which may run in a parallel mode with either or both of the upper and lower screen deck, or may be used with a screen having a finer cut point for further grading of solids in solids laden drilling fluid. Advantageously, the large solids pass over the scalping screen into one of a: skip; and ditch. Preferably, the ditch comprises an auger which moves the solids into a hopper of a solids conveying apparatus, such a positive pressure pneumatic conveying apparatus.

Preferably, the at least one first screen deck has a screened fluid flow tray thereunder for collecting and guiding the screened drilling fluid. Advantageously, the at least one second screen deck has a screened fluid flow tray thereunder for collecting and guiding the screened drilling fluid. Preferably, the basket further comprises at least one discharge duct for directing the screened drilling fluid from the screened fluid flow tray to a sump arranged beneath the basket.

The at least one first screen deck is an upper screen deck and the at least one second screen deck is a lower screen deck, the lower screen deck at least part of which is arranged beneath the upper screen deck. Advantageously, the lower screen deck is wholly arranged beneath the upper screen deck. In an embodiment there is disclosed a shale shaker wherein said lower screen deck has a lower screen deck foot print and the upper screen deck has a an upper screen deck footprint, the lower screen deck footprint arranged wholly beneath said upper screen deck footprint. Preferably such that they both fit into the same basket and cover substantially the same area as each other.

Preferably, the basket further comprises a trough, wherein the at least one first screen deck has a solids discharge end and the trough is arranged thereunder to receive solids. Preferably the trough is made from a composite material, although it may be made from a sheet steel or other metal or plastics material. Preferably, the shale shaker further comprises a sump arranged below the basket, the tough arranged to feed solids into the sump. Advantageously, the basket further comprising a jetting nozzle arranged to jet screened drilling fluid into the trough to facilitate flow of solids therethrough. Preferably, the basket further comprises a flexible duct, solids flowing through the trough into the flexible duct and into the sump. The flexible duct preferably leads from a side wall of the basket to a sump arranged therebelow, the flexible duct allowing the basket to isolate the basket from the base to inhibit vibrations passing to the base.

Preferably, the basket further comprises a trough and a diverter plate, wherein the at least one first screen deck has a solids discharge end and the trough is arranged thereunder, the diverter plate to guide solids into the trough. Advantageously, the basket further comprises a trough and a diverter cap, wherein the at least one first screen deck has a solids discharge end and the trough is arranged thereunder, the diverter cap to inhibit solids flowing into the trough. Preferably, the shale shaker further comprises one of a skip and ditch, wherein the diverter cap guides solids into the one of the skip and the ditch.

Preferably, the at least one first screen deck comprises a left-hand first screen deck and a right-hand first screen deck. Advantageously, the at least one second screen deck comprises a left-hand and a right-hand screen deck.

Advantageously, the basket has a feed end and a solids discharge end, the at least one first screen deck arranged at an uphill angle from horizontal from the feed end of the basket to the solids discharge end. Preferably, the first and second screen decks are arranged at an uphill angle of between three and twelve degrees and most preferably seven degrees. Advantageously, the basket angle can be adjusted to alter the angle of the at least one first and second screen decks. Alternatively, the at least one first and second screen decks are arranged to be horizontal.

The shale shaker further comprises at least one first screen assembly in the at least one first screen deck and at least one second screen assembly in the second screen deck. Advantageously, the first screen assembly has screening material thereon and the second screen assembly has screening material thereon, wherein the screening material of the first screen assembly is the same as the screening material of the second screen assembly to provide the same cut point. The shale shaker is most likely to be operating in parallel mode with this arrangement. Parallel mode tends to be used when large volumes of drilling fluid are required in a drilling operation, such as when boring a large diameter hole, which normally occurs when drilling the top first portion of the well.

Alternatively, the first screen assembly has screening material thereon and the second screen assembly has screening material thereon, wherein the screening material of the second screen assembly is finer than the screening material of the first screen assembly to provide the different cut points. The shale shaker is most likely to be operating in series mode with this arrangement.

The shale shaker further comprises a fixed base, the basket suspended from the base on at least one spring, the basket further comprising a vibrating apparatus for vibrating the basket and the at least one first and second screen decks arranged therein.

In the prior art, the use of a weir initiates a splitting function with regards to the solids. Broadly, the larger and heavier solids sink immediately whilst on the upper deck and only the smaller and lighter solids are carried by the flow over the weir onto the lower deck. Dependent upon the quantities of these sized solids an unequal flow regime may occur. If the majority of the solids are large and heavy then the upper screen level will process the majority of the solids and suffer from inefficient screening, reduced throughput and increased wear. Alternatively, if the volume of the smaller, lighter solids is large then the loading on the lower deck may be increased substantially again resulting in inefficient screening, reduced throughput and increased wear.

Preferably, the flow split would be 50:50 to either deck level and the fluid properties would remain similar such that screen efficiencies are matched, the present disclosure offers this facility and a means to bypass it when sequential / series screening is required.

US 2010/0089652 discloses shale shakers for separating solids from solids laden drilling mud. One shale shaker is shown with four decks including an uphill scalping deck with a weir, whereupon scalped drilling mud and any overflow from the weir falls on to flow tray directing flow on to a feed end of a primary screen, the underflow from which flows on to flow tray to a feed end of an upper secondary screen, any overflow from which weirs over weir into three flow passages into channels on to a lower secondary screen. Screened drilling mud flows from upper secondary screen on to a flow tray and directly from the lower secondary screen into a sump. Thus, the shaker is configured for a series-series-parallel flow.

WO 2004/110589 discloses shale shakers having fluid distribution systems. The use of a diverter gate is again proposed to facilitate the switching of modes between parallel and series operations. By retracting the gate in the flow tray beneath the scalping deck, the scalped solids laden drilling fluid flows from the scalping tray to the upper primary deck only hence inducing series operations. By inserting the diverter gate the scalped solids laden drilling fluid are guided into the rear ductwork of the shaker which is split into a number of equally spaced cavities. The cavities alternate between guiding the fluid to the primary upper deck and guiding the fluid to the secondary lower deck. Eight cavities are shown but the number of cavities can be varied, reducing the number would make the splitting function less efficient whilst increasing the number would make for a more accurate split in volume. The diverter gate is configured such that the fluid and the solids that are carried are able to flow across the full width of the shaker thereby resulting in a 50:50 chance of entering either a primary feed cavity or a secondary feed cavity

The inventors have observed that a shale shakers function is to remove the solids from the fluid that it processes and testing in prior art methods of splitting the flow can lead to differing properties of fluid being processed by either level. This then leads to differing processing efficiencies and thus differing throughputs.

Also disclosed is the weir height within the rear duct work shall be located such that overflow from the upper deck is eliminated and that all excess flow shall be guided to the lower deck such that the operator need only concentrate on controlling the flow rate based on zero fluid discharge from the lower deck. The overflow weir height is set to ensure that excess flow is directed to the screen below rather than flooding the screen entirely and losing fluid from the screen discharge, typically the weir is set at a height corresponding to a beach length of around 300mm.

The present invention provides a method according to claim 1 for controlling a shale shaker comprising a base, a basket isolated from the base, the basket comprising a scalping deck having a scalping screen, an upper deck having a screen assembly and a lower deck having a finer screen assembly, the upper deck being fed with scalped solids laden drilling fluid from a feed tray, the upper screen deck having a feed end and a solids discharge end, wherein the flow tray feeds at least one first duct and at least one second duct, the first duct for feeding scalped solids laden drilling mud from the flow tray to the upper deck and a second duct for feeding and scalped solids laden drilling fluid from the flow tray to the lower deck and a weir located at the feed end between said first duct and said second duct, the method comprising the steps of a pond of scalped solids laden drilling fluid forming on the screen assembly of the upper deck and in the first duct excess scalped solids laden drilling fluid passing over the weir on to the feed end of the finer screen assembly of the lower screen deck. Preferably, this allows an operator to control the shaker by simply watching the lower deck and control the shaker acceleration of the shale shaker or other controllable attributes, such as deck angle in response to seeing solids and/or drilling fluid being discharged from the lower deck.

The present invention also provides a shale shaker according to claim 2 comprising a base, a basket isolated from the base, the basket comprising a scalping deck having a scalping screen, an upper deck having a fine screen assembly and a lower deck having a finer screen assembly, the upper screen deck having a feed end and a solids discharge end, a flow tray for feeding solids laden drilling fluid to a first duct and a second duct, the first duct for feeding solids laden drilling fluid to the fine screen assembly and the second duct for feeding solids laden drilling fluid to the finer screen assembly characterised in that a weir is located between the first duct and second duct, such that in use when a pond of scalped solids laden drilling fluid forms on the fine screen assembly of the upper deck excess scalped solids laden drilling fluid passes from the first duct over the weir into the second duct and on to the feed end of the finer screen assembly of the lower screen deck.

Preferably, the first duct has a first duct opening and second duct has a second duct opening, the first and second duct openings being substantially planar with the flow tray. Alternatively, the first and second duct openings are below the plane of the flow tray. Preferably, the weir height is set to allow a beach length of between 100mm and 500mm and most preferably 300mm on the discharge end of the upper screens. Advantageously, the weir height is adjustable, preferably to allow a beach length of between 0mm and 1m and most preferably between 200mm and 500mm.

Advantageously, the weir is also substantially planar with the flow tray. Preferably, the weir is below the level of the flow tray.

Also disclosed is a method for separating solids from solids laden drilling fluid using a shale shaker comprising a basket having a flow tray with at least first and second duct openings, at least first and second ducts, at least one first screen deck and at least one second screen deck, the method comprising the steps of flowing solids laden drilling fluid over the flow tray, through the at least first and second duct openings into the at least first and second ducts, the at least one first duct directing solids laden drilling fluid to the at least one first screen deck and the at least one second duct directing solids laden drilling fluid to the second screen deck.

Also disclosed is a shale shaker for separating solids from solids laden drilling fluid, the shale shaker comprising a basket having a scalping screen deck, at least one first screen deck and at least one second screen deck, wherein the basket further comprises a flow tray arranged between the scalping screen deck and the at least one first screen deck, and a plurality of first ducts and a plurality of second ducts, the plurality of first ducts for directing solids laden drilling fluid to the at least one first screen deck and the second plurality of second ducts for directing solids laden drilling fluid to the second screen deck.

Preferably, the flow tray has at least one gate opening therein and a gate valve comprising a gate tray slideable from a closed position closing off the gate opening to an open position opening the gate opening allowing solids laden drilling mud to flow therethrough. Preferably, the gate opening is arranged upstream of the plurality of first and second ducts, such that no or only a little solids laden drilling fluid would reach the plurality of first and second ducts.

Advantageously, the basket further comprises a screened fluid flow tray arranged under the at least one first screen deck, the screened fluid flow tray having a selector opening therein and a selector gate valve for selectively opening and closing the selector opening to selectively allow screened drilling fluid to flow therethrough on to the at least one second screen deck.

Also disclosed is a shale shaker for separating solids from solids laden drilling fluid, the shale shaker comprising a base, a basket isolated from the base, the basket comprising a scalping deck, at least one first deck and at least one second deck, the at least one first deck having a feed end and a solids discharge end, a trough arranged in the basket at the discharge end of the at least one first deck and a diverter plate for selectively inhibiting and allowing solids discharged from the discharge end of the at least one first deck into the trough.

Preferably, the shale shaker further comprises a flexible duct leading from the trough into a sump arranged beneath the basket for collecting screened drilling fluid.

Also disclosed is a method for separating solids laden drilling fluid with a shale shaker, the shale shaker comprising a base, a basket isolated from the base, the basket comprising a scalping deck having a scalping screen, at least one first deck having a screen assembly and at least one second deck having a fine screen screen assembly, the at least one first deck having a feed end and a solids discharge end, a trough arranged in the basket at the discharge end of the at least one first deck and a diverter plate the method comprising the steps of flowing solids laden drilling mud on to the scalping screen large solids passing over the scalping screen and solids laden drilling fluid passing through the scalping deck to the screen assembly of the at least one first screen deck sized solids passing over the screen assembly into the trough guided by the diverter plate into the trough.

Preferably, the method further comprises the step of flowing the sized solids from the trough into a sump under the basket, the sump also collecting screened drilling fluid screened by the fine mesh screens of the at least one second screen deck. Advantageously, flowing of the sized solids is facilitated by a jet of drilling fluid.

For a better understanding of the present invention, reference will now be made, by way of example, to the accompanying drawings, in which:
Figure 1 shows a perspective view of an apparatus for separating solids from solids laden drilling mud;
Figure 2A is a side cross-sectional schematic view of an apparatus for separating and sizing solids from solids laden drilling mud, the apparatus comprising a base and a basket;
Figure 2B is an end view of the basket shown in Figure 2A with screen assemblies therein;
Figure 3 is a side view in section of a basket of a shale shaker in accordance with the present invention;
Figure 3A is an enlarged view of part of the basket shown in Figure 3, with parts in a first mode of operation;
Figure 3B is an enlarged view of part of the basket shown in Figure 3 with parts in a second mode of operation;
Figure 3C is an end view of the basket shown in Figure 3 with screen assemblies therein;
Figure 4 is a perspective view of a part of the basket shown in Figure 3A with hidden parts shown, in the first mode of operation indicating direction of flow of solids laden drilling mud to an upper primary screen deck;
Figure 5 is a perspective view of a part of the basket shown in Figure 3A, with hidden parts shown, in the first mode of operation indicating direction of flow of solids laden drilling mud to a lower primary screen deck;
Figure 6A is an enlarged view in cross section of a solids diverter apparatus of the basket shown in Figure 3, in the first mode of operation;
Figure 6B is an enlarged view of a solids diverter apparatus of the basket shown in Figure 3, in the second mode of operation;

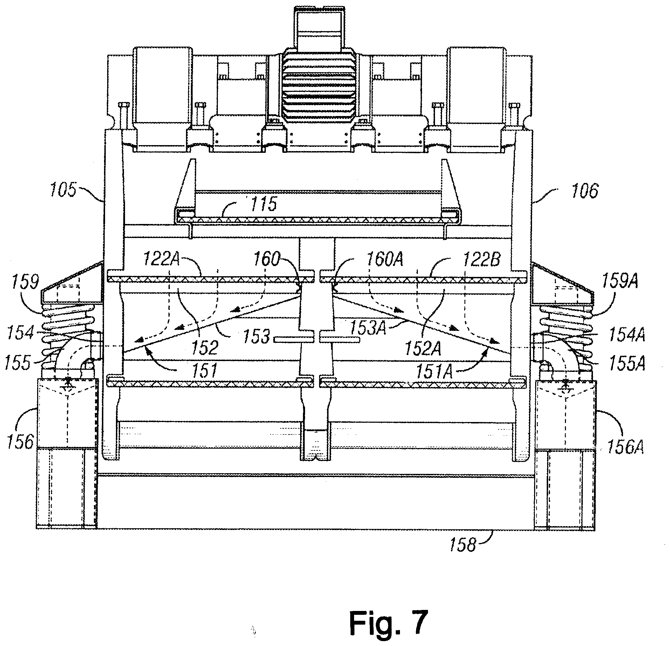

Figure 7 is an end view in section of a shale shaker comprising the basket shown in Figure 3, showing details of a solids diverter apparatus; and
Figure 8 is a side view of the shale shaker shown in Figure 7 arranged over a sump, with some hidden parts shown.

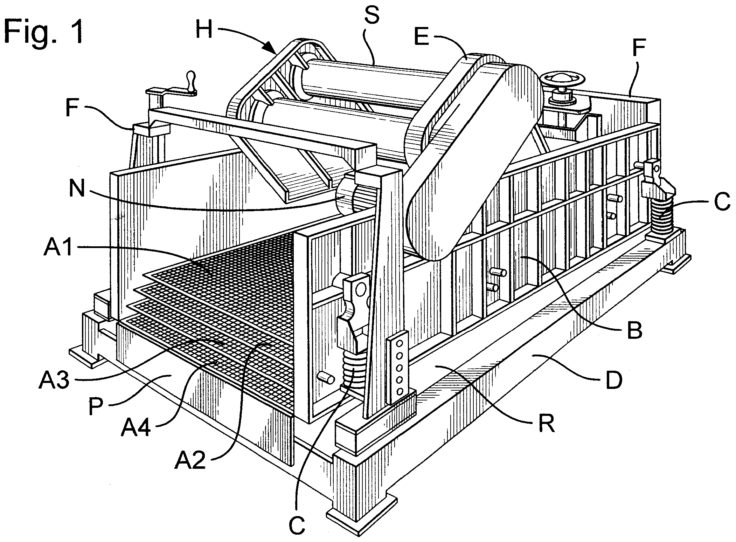

Figure 1 shows an apparatus for separating solids from a solids laden drilling mud, generally referred to as a shale shaker and identified herein by reference H. the shale shaker H comprises a base D having an open bottom R arranged above a collection receptacle (not shown) for receiving screen drilling mud. A basket B is arranged on springs C on the base D. A vibratory apparatus E is arranged on top of the basket B. The vibratory apparatus E comprises an electric or hydraulic motor M rotating offset clump weights hidden within casing S, which induce a motion in the basket D. An upper, upper middle, lower middle and lower screen assemblies A1, A2, A3, A4 are arranged in the basket D and fixed thereto in rails (not shown) so that the motion induced in the basket is transferred to the screen assemblies A1, A2, A3, A4. Solids laden drilling fluid is fed on to the screen assemblies A1-A4 from a feed chamber F at a feed end of the apparatus. The motion induced in the screen assemblies A1-A4 facilitates separation of solids from drilling mud. Screened drilling mud passes through the screen assemblies into the collection receptacle (not shown) and solids climb along the screen assemblies A1-A4 to a discharge end P of the shale shaker and into a skip, ditch or other cuttings transfer apparatus (not shown).

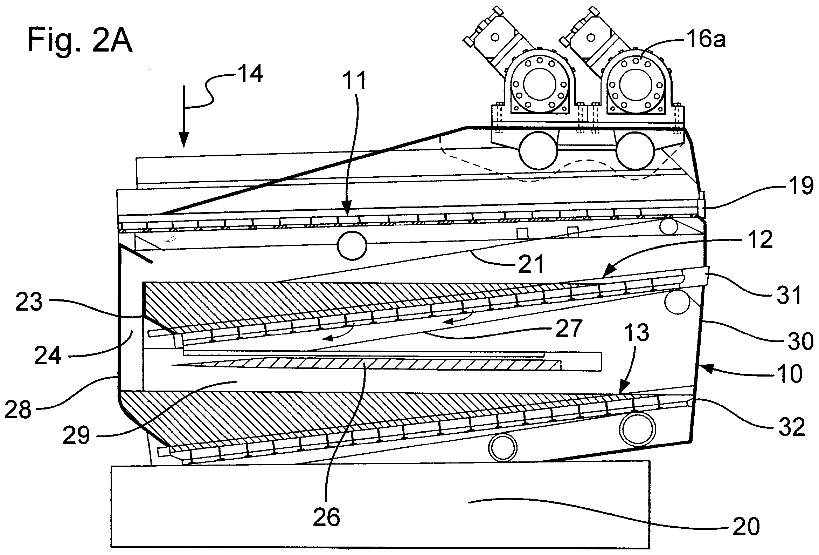

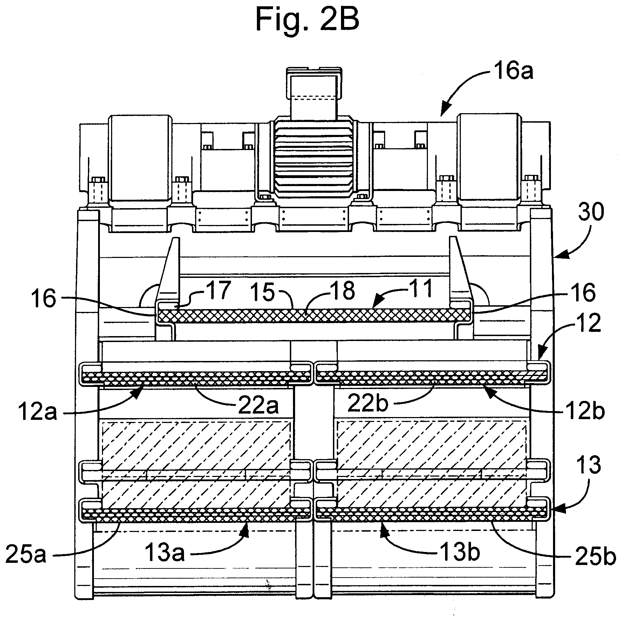

Figures 2A and 2B show a shale shaker 10 having a base 20 and a basket 30 arranged thereon on springs (not shown) . The basket 30 comprising a scalping deck 11, an upper primary deck 12 and a lower primary deck 13. The upper primary deck 12 has a left-hand side 12a and a right-hand side 12b. The lower primary deck has a left-hand side 13a and a right-hand side 13b. Solids laden drilling fluid is introduced to a feed end of the shale shaker 14 from a feeder (not shown) on to a scalping screen 15 arranged in C-shaped channels 16 of the scalping deck 11. An expandable pneumatic bladder 17 is arranged in a top part of the C-shaped channels 16 to clamp the scalping screen 15 therein. Alternatively, a wedge may be used to secure the scalping screen 15 in the C-shaped channels 16. The scalping screen 15 comprises a screen 18 having relatively large openings for inhibiting large particles from passing though on to the primary decks, but allowing some solids and drilling mud therethrough. The scalping deck 11 and the screen 15 thereon is arranged at an uphill tilt of approximately one degree from horizontal, although the scalping screen 15 and scalping deck 11 may be arranged horizontally, slightly downhill or at a slightly greater uphill angle. Vibratory apparatus 16a fixed to the basket 30 induces motion therein. The motion facilitates separation of large solids from the solids laden drilling mud and induces movement in the large solids along the scalping screen 15 from the feed end 14 to the discharge end 19 of the shale shaker. The large solids may be caught in a ditch or on a conveying means and further processed or used in other operations. The solids laden drilling fluid which passes through the scalping screen 15 falls on to a flow tray 21 which directs the solids laden drilling fluid to the feed end 14 of screen assemblies 22a and 22b in the upper primary deck 12. A weir 23 is arranged at the feed end of the primary deck 12 to retain the solids laden drilling fluid. If the level of the solids laden drilling fluid rises beyond the height of the weir 23, solids laden drilling fluid passes thereover into a duct 23 and on to screen assemblies 25a and 25b in the lower primary screen deck 13. The screen assemblies 22a, 22b and 25a and 25b are preferably of the same type.

A gate valve 26 in the form of a slideable tray, is in a closed position to run the shale shaker in a parallel mode. Screened drilling mud falls through the screen assemblies 22a and 22b in the upper screen deck on to a flow tray 27 and over the closed gate valve 26. And into a duct 28 which runs parallel to the duct 24. However, duct 28 leads to the bottom of the basket and directly into the collection receptacle (not shown) therebelow. Solids fall off the discharge end 31 of upper screen deck 12 and discharge end 32 of the lower screen deck 13 and into a skip or other conveying apparatus for conveying the solids for further processing or re-use.

The gate valve 26 may be retracted to allow drilling mud screened by the screen assemblies 22a and 22b in the upper screen deck 12 to be further screened by screen assemblies 25a and 25b on the lower screen deck 13. The shale shaker thus runs in a series mode. A finer screen mesh is used in the screen assemblies 25a and 25 b than the screen mesh used in screen assemblies 22a and 22b. Drilling mud screened by the screen assemblies 22a and 22b in the upper screen deck 12 flows in the flow tray 27 and into a duct 29, which directs the screened drilling mud on to the feed end of the screen assemblies 25a and 25b in the lower screen deck 13. Sized solids fall off the discharge end 31 of upper screen deck 12 into a conveyor (not shown) to be conveyed and mixed into a fresh batch of drilling mud for re-circulation. These sized solids are used to block cracks in the formation as hereinbefore described. Solids discharges from the discharge end 32 of the lower screen deck 13 are conveyed in a separate conveyor or added to a skip for further processing or used for other purposes.

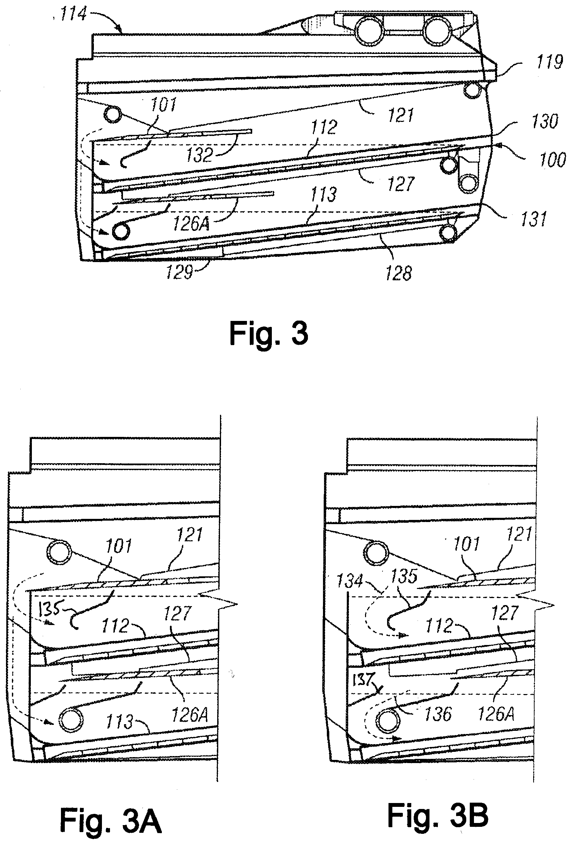

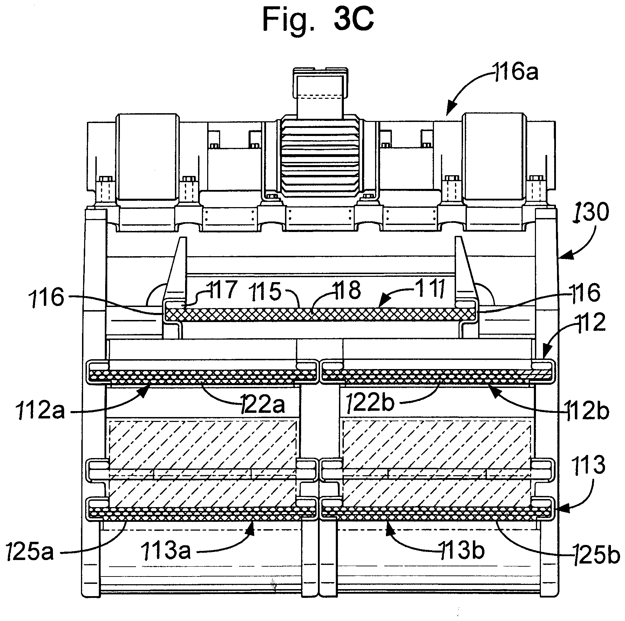

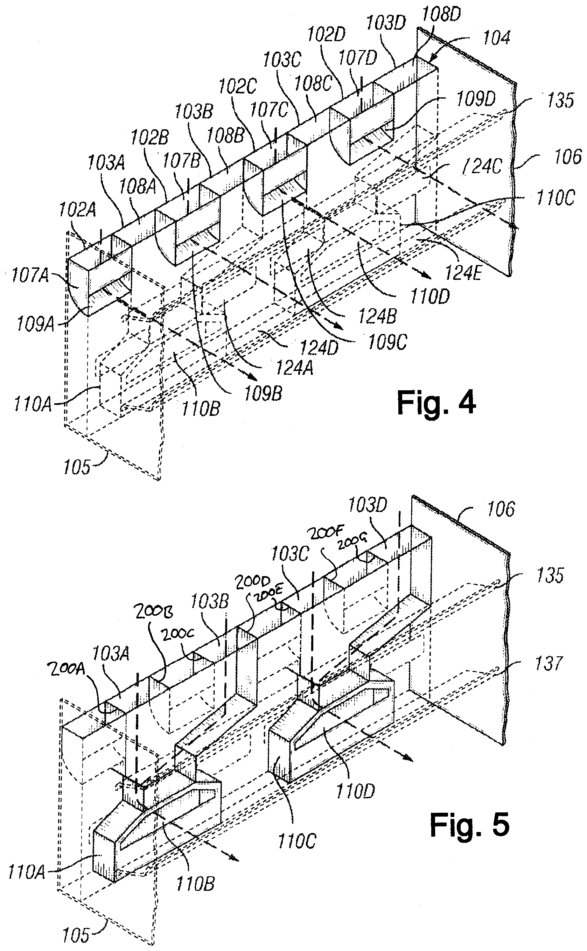

Referring to Figures 3, 3A, 3C, 4 and 5 there is shown a basket 100 of a shale shaker. The basket 100 comprising a scalping deck 111, an upper primary deck 112 and a lower primary deck 113. The upper primary deck 112 has a left-hand side 112a and a right-hand side 112b. The lower primary deck 113 has a left-hand side 113a and a right-hand side 113b. Solids laden drilling fluid is introduced to a feed end of the shale shaker 114 from a feeder (not shown) on to a scalping screen 115 arranged in C-shaped channels 116 of the scalping deck 111. An expandable pneumatic bladder 117 is arranged in a top part of the C-shaped channels 116 to clamp the scalping screen 115 therein. Alternatively, a wedge may be used to secure the scalping screen 115 in the C-shaped channels 116. The scalping screen 115 comprises at least one layer of screen material 118, such as wire mesh having relatively large openings for inhibiting large particles from passing though on to the upper and lower primary decks 112 and 113, but allowing some solids and drilling mud therethrough. The scalping deck 111 and the scalping screen 115 thereon is arranged at an uphill tilt of approximately one degree from horizontal, although the scalping screen 115 and scalping deck 111 may be arranged horizontally, slightly downhill or at a slightly greater uphill angle. Vibratory apparatus 116a fixed to the basket 100 induces motion therein. The motion facilitates separation of large solids from the solids laden drilling mud and induces movement in the large solids along the scalping screen 15 from the feed end 114 to the discharge end 119 of the shale shaker. The large solids may be caught in a skip, ditch or on a conveying means (not shown) and further processed or used in other operations. The solids laden drilling fluid which passes through the scalping screen 115 falls on to a flow tray 121 which directs the solids laden drilling fluid over a closed distribution gate valve in the form of a slideable tray distribution gate tray 101, and as shown in Figures 4 and 5, through eight duct openings 102a, 102b, 102c, 102d and 103a, 103b, 103c and 103d of a manifold 104 arranged between side walls 105 and 106 of the basket 100. Preferably, the eight duct openings 102a, 102b, 102c, 102d and 103a, 103b, 103c and 103d are located flush with or slightly below the flow tray 121 and distribution gate tray 101. The openings 102a, 102b, 102c, 102d and 103a, 103b, 103c and 103d may be arranged vertically in the manifold 104, with the openings 102a, 102b, 102c, 102d and 103a, 103b, 103c and 103d each having a lower lip substantially flush with or slightly below the distribution gate tray 101. The solids laden drilling fluid flows in approximately equal quantities through duct openings 102a to 102d into ducts 107a to 107d and through openings 103a to 103d into ducts 108a to 108d. Approximately an eighth of the flow solids laden drilling fluid passes into each opening 102a to 102d and 103a to 103d. Ducts 107a and 107b lead to respective discharge outlets 109a and 109b, discharging solids laden drilling fluid on to a feed end of screens 122a of the upper primary deck 112. Ducts 107c and 107d lead to respective discharge outlets 109c and 109d, discharging solids laden drilling fluid on to a feed end of screens 122b of the upper primary deck 112. Ducts 108a and 108b merge into duct 110a and ducts 108c and 108d merge into duct 110c, discharging solids laden drilling fluid through discharge opening 110d on to feed ends of screens 125a and 125b respectively of the lower primary deck 113.

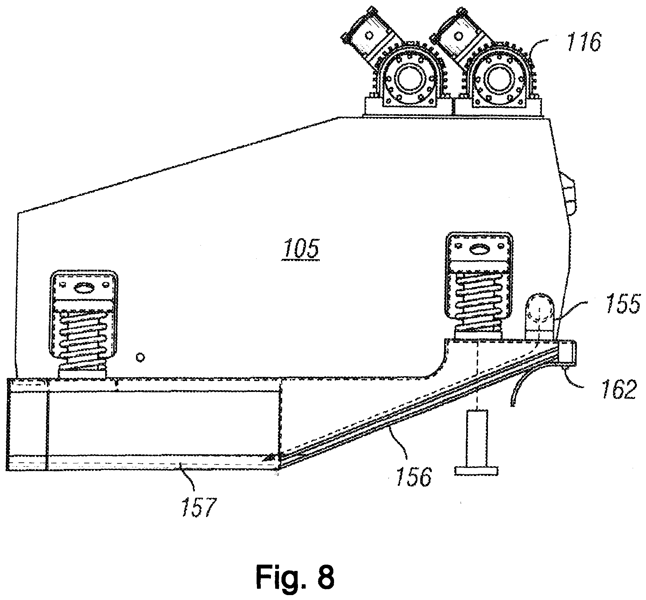

Drilling mud screened by screens 122a and 122b falls through the screens 122a and 122b on to a flow tray 127 and flows down along over selector gate trays 126a and 126b respectively and into fluid discharge openings 124a, 124b and 124c. Screened drilling fluid passes through opening 124a and 124b into fluid discharge duct 124d and is directed into a sump 157 (see Fig. 8), screened drilling fluid also passes through opening 124c and into fluid discharge duct 124e which also directs screened drilling fluid into the sump 157 (see Fig. 8) arranged below the basket 100.

Solids laden drilling fluid screen by screens 125a and 125b falls through the screens 125a and 125b on to a flow tray 128 which discharges the screened drilling fluid through opening 129 into the sump (not shown) or collection receptacle (not shown)

Solids screened by the screens 122a and 122b and screens 125a and 125b are discharged over solids discharge end 130 and 131 respectively and into a ditch, skip or other solids collection or conveying apparatus.

In this "parallel" mode of operation, both upper and lower screen decks are used to screen the same solids laden drilling fluid, which has simply had large solids removed by the scalping screen 115. Thus, in this parallel ode, the screen assemblies 122a, 122b and 125a and 125b are preferably of the same type.

Referring to Figure 3B, a "series" mode of operation is shown. Distribution gate tray 101 and selector gate trays 126a and 126b are retracted. The distribution gate tray 101 is arranged in a rail 132. The distribution gate tray 101 is retracted along the rail 132 by activation of an actuator (not shown), which may be pneumatic, hydraulic, electric or mechanical and may be activated by a switch (not shown) on the shale shaker or by remote control from a control room. Selector gate trays 126a and 126b are arranged in respective sets of rails 133a and 133b. The selector gate trays 126a and 126b are retracted simultaneously along the sets of rails 133a and 133b by activation of an actuator (not shown), which may be pneumatic, hydraulic, electric or mechanical and may be activated by a switch (not shown) on the shale shaker or by remote control from a control room.

In this "series" mode, the distribution gate tray 101 and selector gate trays 126a and 126b are retracted revealing an opening 134. Solids laden drilling fluid flows through the opening 134 over an upper diverter tray 135 and on to a feed end of the screens 122a and 122b on the upper screen deck 112. Screened drilling fluid flowing through the screens 122a and 122b flows on to the flow tray 127 and through an opening 136 revealed by the retracted selector gate trays 126a and 126b over a lower diverter tray 137 on to a feed end of the screens 125a and 125b on the lower screen deck 113.

In this "series" mode of operation, the screens 122a and 122b on the upper screen deck 112 are used for the first "cut" to remove larger solids and the screens 125a and 125b on the lower screen deck 113 are used to make a finer cut. Thus in series mode, the screens 125a and 125b will be of finer mesh size than the screens 122a and 122b. The solids removed by the screens 122a and 122b are thus sized solids, which can be reused in the screened drilling mud. The sized solids are useful for, amongst other things, as Wellbore Strengthening Materials to lodge or block cracks in the walls of the wellbore as the drilling mud is circulated.

In use, a pond of scalped solids laden drilling fluid may form on the screens 122a and 122b of the upper primary screen deck 112. It should be noted that a head of scalped solids laden drilling fluid will move up ducts 107A-D substantially in line with the head of the pond on the upper primary screen 112. Excess scalped solids laden drilling fluid will pass over weirs 200A to 200G from ducts 107A-D into ducts 108A-D and thus excess scalped solids laden drilling fluid will flow therefrom on to a feed end of the lower primary deck 113.

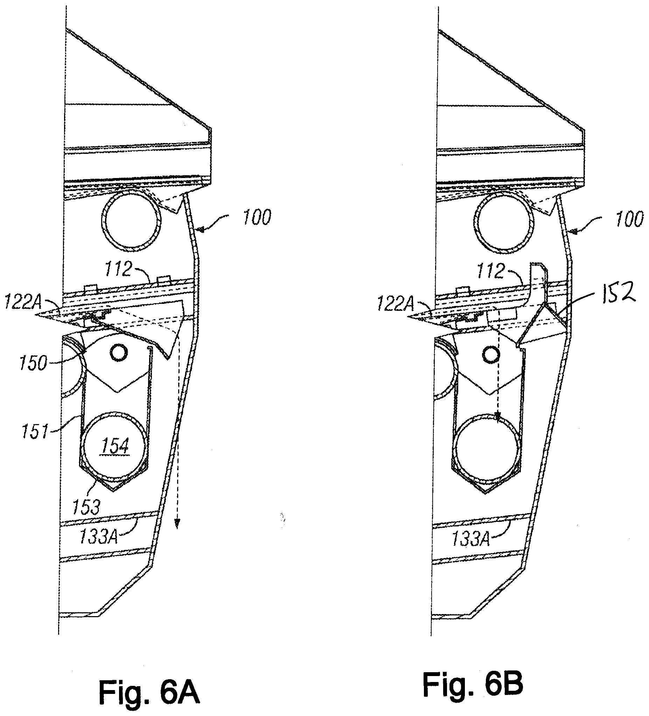

Figure 6A shows in cross-section the solids discharge end of the basket 100, taken through side 112a. Solids are conveyed uphill along the top surface of the screens 122a and 122b by the vibratory motion induced in the screens 122a and 122b by the vibratory apparatus 116. The solids fall from screens 122a and 122b on to respective parallel diverter plates 150 (only side 112a shown) fitted over a trough 151 and trough 151a. The parallel diverter plate 150 is angled at approximately twenty five degrees from horizontal to facilitate directing the solids out of the basket and into a skip, ditch or means for conveying the solids. The parallel diverter plate 150 is fitted over the trough 151 preferably when the shale shaker is in the parallel mode of operation.

Figure 6B shows the diverter plate 150 removed and replaced with series diverter plates 152 and 152a installed at the end of the basket 100. The series diverter plates 152 and 152a are fitted at the discharge end of the basket 100 to direct solids from screens 122a and 122b into troughs 151 and 151a. The solids flow through the trough 151 and 15a, which have a floor 153, 153a which slope towards respective openings 154 and 154a in sides 105 and 106. Flexible duct connectors 155 and 155a lead from openings 154 and 154a respectively to sump channels 156 and 156a in a base 158. He basket 100 is isolated from the base 158 on four springs 159 and 159a (only two shown). The sump channels 156 and 156a led into sump 157 beneath the basket 100. The generally smaller solids discharging from discharge end 131 of the lower screen deck 113 fall into the skip, ditch or other solids conveying apparatus to be disposed of or further processed form construction or industrial use. Thus the solids sized between the scalping deck and the upper primary screen are returned into the screened drilling mud in the sump 157 to be re-circulated in a wellbore. The flow of solids through the troughs 151 and 151a is facilitated by fully screened drilling fluid jetted through jetting nozzles 160 and 160a respectively. The jetting nozzles are connected to drilling mud supply hoses (not shown) and a pump (not shown). Jetting nozzles 1162 are also provided in the sump channels 1156 after the flexible duct coupling 11156 to facilitate flow of solids into the sump 1157.

## Claims

1. A method for controlling a shale shaker comprising a base (D), a basket (100) isolated from the base (D), the basket (100) comprising a scalping deck (111) having a scalping screen (115), an upper deck (112) having a screen assembly (122a,122b) and a lower deck (113) having a finer screen assembly (125a,125b), the upper deck (112) being fed with scalped solids laden drilling fluid from a flow tray (121), the upper screen deck (112) having a feed end and a solids discharge end, **characterised in that** the flow tray (121) feeds at least one first duct (107A-D) of the shale shaker and at least one second duct (108A-D) of the shale shaker, the first duct (107A-D) for feeding scalped solids laden drilling mud from the flow tray (121) to the upper deck (112) and the second duct (108A-D) for feeding and scalped solids laden drilling fluid to the lower deck (113) and a weir (200A-G) located at the feed end between said first duct (107A-D) and said second duct (108A-D), the method comprising the steps of a pond of scalped solids laden drilling fluid forming on the screen assembly (122a,122b) of the upper deck (112) and in the first duct (107A-D) excess scalped solids laden drilling fluid passing over the weir (200A-G) into the second duct (108A-D) and on to the feed end of the finer screen assembly (125a,125b) of the lower screen deck (113).

2. A shale shaker comprising a base (D), a basket (100) isolated from the base (D), the basket (100) comprising a scalping deck (111) having a scalping screen (115), an upper deck (112) having a fine screen assembly (122a,122b) and a lower deck (113) having a finer screen assembly (125a,125b), the upper screen deck (112) having a feed end and a solids discharge end, a flow tray (121) for feeding solids laden drilling fluid to a first duct (107A-D) of the shale shaker and a second duct (108A-D) of the shale shaker, the first duct (107A-D) for feeding solids laden drilling fluid to the fine screen assembly (122a,122b) and the second duct (108A-D) feeding solids laden drilling fluid to the finer screen assembly (125a, 125b), **characterised in that** a weir (200) is located at the feed end between the first duct (107A-D) and second duct (108A-D), such that in use when a pond of scalped solids laden drilling fluid forms on the fine screen assembly (122a,122b) of the upper deck (112) excess scalped solids laden drilling fluid passes from the first duct (107A-D) over the weir (200) into the second duct (108A-D) and on to the feed end of the finer screen assembly (125a,125b) of the lower screen deck (113) .

3. A shale shaker as claimed in Claim 2, wherein the first duct (107A-D) has an opening (102A-D) and second duct (108A-D) has a second duct opening (103A-D), the first and second duct openings being substantially planar with the flow tray (121).

4. A shale shaker as claimed in Claim 2, wherein the weir (200) is also substantially planar with the flow tray (121) .

5. A shale shaker as claimed in Claim 2, wherein the weir (200) is below the level of the flow tray (121).

## Patentansprüche

1. Verfahren zum Regeln von einem Schieferschüttler, umfassend eine Basis (D), einen Korb (100), der von der Basis (D) isoliert ist, wobei der Korb (100) ein Grobsiebdeck (111), das ein Grobsieb (115) aufweist, ein oberes Deck (112), das eine Siebanordnung (122a, 122b) und ein unteres Deck (113), das eine feinere Siebanordnung (125a, 125b) aufweist, aufweist, wobei das obere Deck (112) mit grob gesiebtem, feststoffbeladenem Bohrfluid aus einem Strömungstablett (121) beschickt wird, wobei das obere Siebdeck (112) ein Beschickungsende und ein Feststoffaustrittsende aufweist, **gekennzeichnet dadurch, dass** das Strömungstablett (121) mindestens einen ersten Kanal (107A-D) des Schieferschüttlers und mindestens einen zweiten Kanal (108A-D) des Schieferschüttlers beschickt, den ersten Kanal (107A-D), um das obere Deck (112) mit grob gesiebtem, feststoffbeladenem Bohrschlamm aus dem Strömungstablett (121) zu beschicken, und den zweiten Kanal (108A-D), um das untere Deck (113) mit grob gesiebtem, feststoffbeladenem Bohrfluid zu beschicken, und durch eine Überlaufplatte (200A-G), die an dem Beschickungsende zwischen dem ersten Kanal (107A-D) und dem zweiten Kanal (108A-D) angeordnet ist, wobei das Verfahren die Schritte eines Bildens von einem Teich von grob gesiebtem, feststoffbeladenem Bohrfluid auf der Siebanordnung (122a, 122b) des oberen Decks (112) und eines Übertretens von überschüssigem, grob gesiebtem, feststoffbeladenem Bohrfluid in dem ersten Kanal (107A-D) über die Uberlaufplatte (200A-G) in den zweiten Kanal (108A-D) und weiter zu dem Beschickungsende der feineren Siebanordnung (125a, 125b) des unteren Siebdecks (113) umfasst.

2. Schieferschüttler, umfassend eine Basis (D), einen Korb (100), der von der Basis (D) isoliert ist, wobei der Korb (100) ein Grobsiebdeck (111), das ein Grobsieb (115) aufweist, ein oberes Deck (112), das eine feine Siebanordnung (122a, 122b) aufweist, und ein unteres Deck (113), das eine feinere Siebanordnung (125a, 125b) aufweist, wobei das obere Siebdeck (112) ein Beschickungsende und ein Feststoffaustrittsende aufweist, und ein Strömungstablett (121) umfasst, um einen ersten Kanal (107A-D) des Schieferschüttlers und einen zweiten Kanal (108A-D) des Schieferschüttlers mit feststoffbeladenem Bohrfluid zu beschicken, den ersten Kanal (107A-D), um die feine Siebanordnung (122a, 122b) mit feststoffbeladenem Bohrfluid zu beschicken, und wobei der zweite Kanal (108A-D) die feinere Siebanordnung (125a, 125b) mit feststoffbeladenem Bohrfluid beschickt, **dadurch gekennzeichnet, dass** eine Überlaufplatte (200) an dem Beschickungsende zwischen dem ersten Kanal (107A-D) und dem zweiten Kanal (108A-D) angeordnet ist, so dass in Verwendung, wenn sich ein Teich von grob gesiebtem, feststoffbeladenem Bohrfluid auf der feinen Siebanordnung (122a, 122b) des oberen Decks (112) bildet, überschüssiges, grob gesiebtes, feststoffbeladenes Bohrfluid aus dem ersten Kanal (107A-D) über die Überlaufplatte (200) in den zweiten Kanal (108A-D) und weiter zu dem Beschickungsende der feineren Siebanordnung (125a, 125b) des unteren Siebdecks (113) übertritt.

3. Schieferschüttler nach Anspruch 2, wobei der erste Kanal (107A-D) eine Öffnung (102A-D) und der zweite Kanal (108A-D) eine zweite Kanalöffnung (103A-D) aufweist, wobei die erste und zweite Kanalöffnung im Wesentlichen plan mit dem Strömungstablett (121) sind.

4. Schieferschüttler nach Anspruch 2, wobei die Überlaufplatte (200) auch im Wesentlichen plan mit dem Strömungstablett (121) ist.

5. Schieferschüttler nach Anspruch 2, wobei sich die Überlaufplatte (200) unter der Ebene des Strömungstabletts (121) befindet.

## Revendications

1. Procédé de commande d'un tamis vibrant comprenant une base (D), un panier (100) isolé de la base (D), le panier (100) comprenant un pont d'élimination (111) ayant un crible d'élimination (115), un pont supérieur (112) ayant un ensemble crible (122a, 122b) et un pont inférieur (113) ayant un ensemble crible plus fin (125a, 125b), le pont supérieur (112) étant alimenté en un fluide de forage chargé de matières solides éliminées depuis un plateau d'écoulement (121), le pont de crible supérieur (112) ayant une extrémité d'alimentation et une extrémité d'évacuation de matières solides, **caractérisé en ce que** le plateau d'écoulement (121) alimente au moins un premier conduit (107A à D) du tamis vibrant et au moins un second conduit (108A-D) du tamis vibrant, le premier conduit (107A à D) étant destiné à alimenter le pont supérieur (112) en une boue de forage chargée de matières solides éliminées du plateau d'écoulement (121) et le second conduit (108A-D) étant destiné à alimenter en un fluide de forage chargé de matières solides éliminées le pont inférieur (113) et un déversoir (200A à G) situé au niveau de l'extrémité d'alimentation entre ledit premier conduit (107A à D) et ledit second conduit (108A-D), le procédé comprenant les étapes de formation d'un bassin de fluide de forage chargé de matières solides éliminées sur l'ensemble crible (122a, 122b) du pont supérieur (112) et dans le premier conduit (107A à D), de passage d'un excès de fluide de forage chargé de matières solides éliminées par-dessus le déversoir (200A à G) pour aller dans le second conduit (108A-D) et dans l'extrémité d'alimentation de l'ensemble crible plus fin (125a, 125b) du pont de crible inférieur (113).

2. Tamis vibrant comprenant une base (D), un panier (100) isolé de la base (D), le panier (100) comprenant un pont d'élimination (111) comportant un crible d'élimination (115), un pont supérieur (112) ayant un ensemble crible fin (122a, 122b) et un pont inférieur (113) ayant un ensemble crible plus fin (125a, 125b), le pont de crible supérieur (112) ayant une extrémité d'alimentation et une extrémité d'évacuation de matières solides, un plateau d'écoulement (121) pour alimenter en un fluide de forage chargé de matières solides un premier conduit (107A à D) du tamis vibrant et un second conduit (108A à D) du tamis vibrant, le premier conduit (107A à D) étant destiné à alimenter en un fluide de forage chargé de matières solides l'ensemble crible fin (122a, 122b) et le second conduit (108A à D) alimentant en un fluide de forage chargé de matières solides l'ensemble crible plus fin (125a, 125b),
**caractérisé en ce qu'**un déversoir (200) est situé à l'extrémité d'alimentation entre le premier conduit (107A à D) et le second conduit (108A à D), de sorte qu'en utilisation, lorsqu'un bassin de fluide de forage chargé de matières solides éliminées se forme sur l'ensemble crible fin (122a, 122b) du pont supérieur (112), un excès de fluide de forage chargé de matières solides éliminées passe du premier conduit (107A à D) par-dessus le déversoir (200) pour aller dans le second conduit (108A à D) et dans l'extrémité d'alimentation de l'ensemble crible plus fin (125a, 125b) du pont de crible inférieur (113).

3. Tamis vibrant selon la revendication 2, dans lequel le premier conduit (107A à D) a une ouverture (102A à D) et le second conduit (108A à D) a une seconde ouverture de conduit (103A à D), les première et seconde ouvertures de conduit étant sensiblement planes avec le plateau d'écoulement (121).

4. Tamis vibrant selon la revendication 2, dans lequel le déversoir (200) est également sensiblement plan avec le plateau d'écoulement (121).

5. Tamis vibrant selon la revendication 2, dans lequel le déversoir (200) est en dessous du niveau du plateau d'écoulement (121).
